# EUROPEAN PATENT APPLICATION

(11) **EP 1 642 832 A1**
(43) Date of publication of application: **05.04.2006**
(21) Application number: 04425731.9
(22) Date of filing: 29.09.2004
(51) Int. Cl.: B65B 11/02, B65G 57/04

(54) **A machine and process for palletizing deformable containers**

(71) Applicant: Bema s.r.l., 42030 Viano (Reggio Emilia) (IT)
(72) Inventor: Grassi, Antonio, 42031 Baiso (Reggio Emilia) (IT)
(74) Representative: Gotra, Stefano

(57) **Abstract**

The machine comprises: a platform (2) for a pallet (20); a hopper (3) located above the platform (2), which is conformed and arranged in such a way as to direct successive layers of deformable containers (30) onto the pallet (20) while restraining the containers (30) peripherally; means (4) for arranging extensible film around the hopper (3) so that, by effect of a relative vertical sliding motion between the pallet (20) and the hopper (3), the extensible film transfers from the hopper (3) to the successive layers of deformable containers (30), peripherally restraining the containers (30). The process comprises the following stages:wrapping at least a first layer of extensible film around the hopper and the pallet so that at least a first tract of the film is below the pallet at least over a part of a breadth of the film; translating the pallet downwards, progressively wrapping the extensible film in order for the film to be arranged, for a part of a breadth thereof, about a lower portion of the hopper, and for a further part of the breadth thereof, about the pallet, while successive layers of deformable containers are deposited on the pallet through the hopper.

## Description

Deformable containers of known type are, for example, plastic or paper bags, or bags made of other materials, all commonly used in the ceramics or construction industry for containing loose materials such as sand, dry or wet malts, earthen materials for casting, etc.

These bags are at present distributed in metal crates or single-use sacks.

Metal crates have the advantage of being usable several times, but involve special space needs for stacking when empty. The also require some maintenance operations such as painting and repair, as they will inevitably be damaged due to the type of use they are subject to. A further drawback is that quite often they are not returned by the user. Managing these empty crates also requires logistical operations, in which the delivery of full crates is made to coincide with the return of the empties, so that transport costs are kept under control.

A further drawback of metal crates is that they are generally emptied by hand. The final bag users, whether for space or economy problems, do not possess machines for unloading the bags from the crates. At building sites, for example, where sacks are frequently located on scaffolding or in any case in elevated positions to enable use at higher floors, the installation of these machines can be distinctly problematic. It is also necessary to consider the expenses for buying and using unloading machines, which are rarely justifiable when considering the volume bags used. Generally the operators remove the bags by hand, tipping over the crate, when possible, or lifting the bags out of the crates, a manoeuvre which exposes the operator to considerable weight-lifting and risk of injury. The crate itself is quite unwieldy and therefore a nuisance, especially in small working spaces.

The sacks have the advantage of not requesting very large spaces for storage, nor do they require maintenance and transport for "empties", but they do have the drawback of being usable only once and therefore constituting an extra packaging cost. Then they have to be correctly disposed of, which further adds to costs. Their disadvantages at the workplace are the same as those for metal crates, with the added problem that the bags are deformable and thus relatively unstable and difficult to move using cranes or lift trucks.

The main aim of the present invention is to provide a process and a machine for palletizing deformable containers which obviate the drawbacks inherent in the prior art.

An advantage of the present invention is that for packing the deformable containers no metal crates or large sacks are necessary.

A further advantage of the invention is that the deformable containers are packed with an economical material which is easy to eliminate, and that the containers can be stored in large quantities without occupying large spaces.

A further advantage of the invention is that it can be easily inserted in high-productivity line production processes.

Further characteristics and advantages of the present invention will better emerge from the detailed description that follows of a machine and process for palletizing deformable containers, illustrated purely by way of a non-limiting example in the accompanying figures, in which:

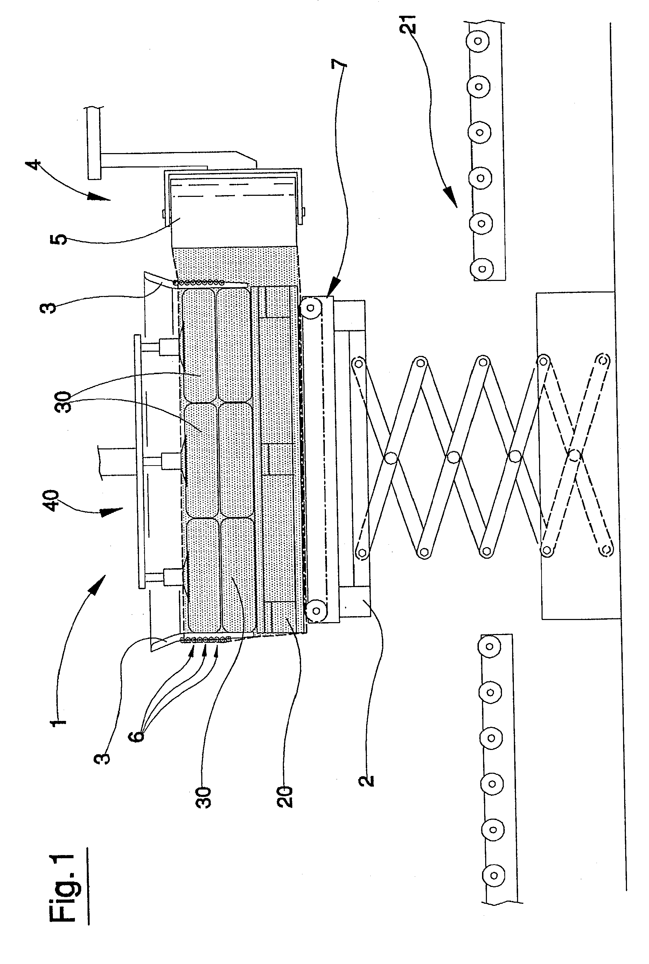

figure 1 is a schematic front view of the machine of the present invention;

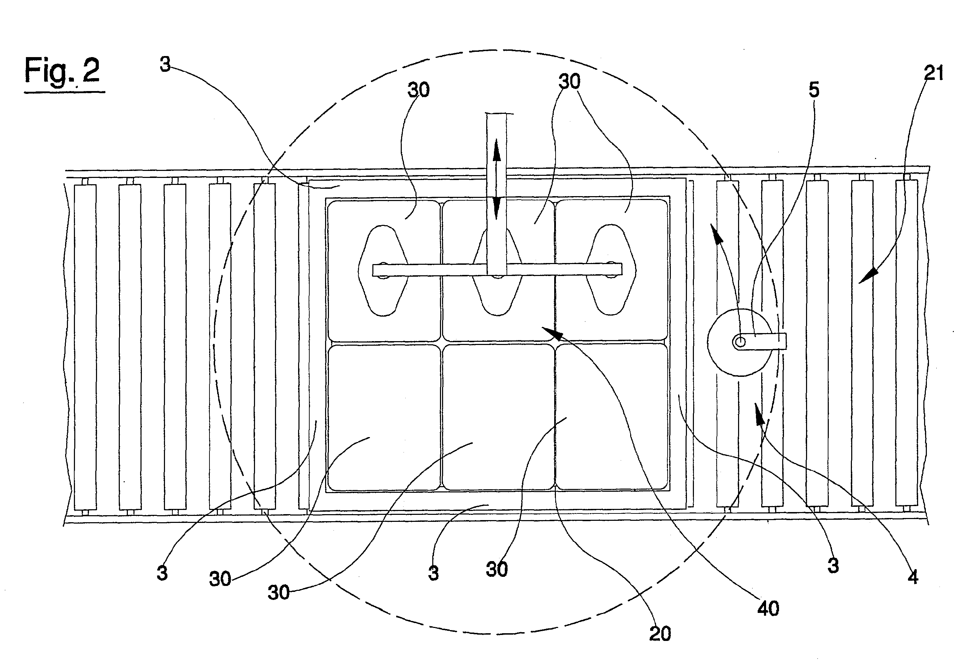

figure 2 is a schematic view from above of the machine of figure 1;

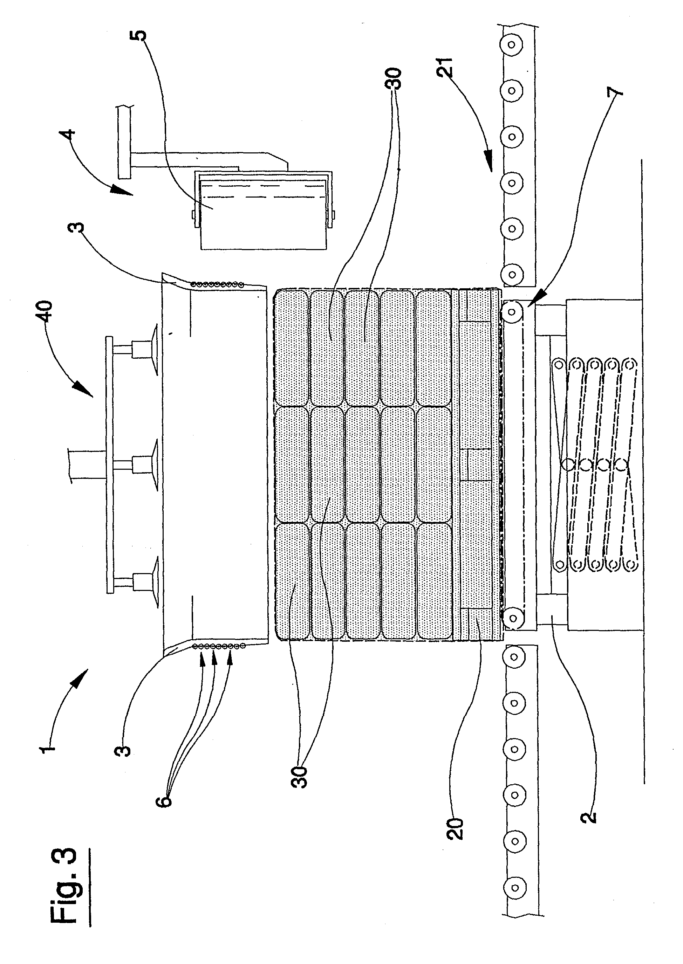

figure 3 is the machine of figure 1 in a different work phase.

With reference to the figures of the drawings, number 1 denotes in its entirety a machine according to the present invention. It comprises a hopper 3, located above a platform 2 for pallets 20, and is conformed and arranged in such a way as to direct layers of deformable containers 30 onto a pallet 20, while peripherally restraining the containers 30. The platform 2 is vertically mobile between a lowered position and a raised position at which it is in proximity of the hopper 3. In the lowered position, the platform 2 is aligned with a transport line 21 predisposed to feed and unload pallets 20 to and from the platform 2 in a horizontal direction. The platform 2 comprises a transport system 7 for moving the pallets 20 in the horizontal transport direction.

The hopper 3 exhibits an upper portion, having a larger section with respect to a lower portion thereof, for inviting the containers 30 onto the pallet, which containers 30 are introduced from above by means of a gripping device 40, such as an articulated arm provided with suckers.

The machine of the invention further comprises means 4 for arranging extensible film about the hopper 3 so that, by relative vertical sliding motion between the pallet 20 and the hopper 3, which will be better described herein below, the film transfers from the hopper 3 to successive layers of the deformable containers 30, thus peripherally restraining the containers 30.

The means 4 for arranging the film comprise an unwinding device 5 predisposed to unwind the extensible film so that it is arranged, over a part of a breadth of the film, about a lower portion of the hopper 3, and for another part of the breadth thereof about the pallet 20. The unwinding device 5 is a common reel which can rotate about the pallet 20 and comprises a support for an extensible film reel and for pliers for gripping a free end of the reel of film and initiating a winding cycle. The lower portion of the hopper 3 about which the film winds can be more or less extended, according to needs of use.

The unwinding device 5, which will not be described in detail herein as it is of known type, winds the film about the pallet 20, while the platform 2 descends from the raised position into the lower position and while successive layers of deformable containers 30 are deposited on the pallet 20. The device 5 acts in such a way that at least a first tract of the film is arranged, at least over part of a breadth thereof, below the platform 2 of the pallet 20. In this way the film is drawn downwards, by effect of the downwards movement of the pallet 20, passing from the lower portion of the hopper 3 and progressively arranging itself about the pallet 20.

During the first palletising stage, the platform 2 is in the raised position at which the pallet 20 is in proximity of the lower position of the hopper 3. The first layer of containers 30 is deposited on the pallet 20 by the hopper 3 and the unwinding device 5 performs a first winding lap to wrap the extensible film about the pallet 20. The device 5 is arranged so that an upper portion of the breadth of the reel of film will wrap around the lower portion of the hopper 3, and the remaining portion of the breadth of the film will be arranged about a zone underlying the hopper 3. During the first stage of the cycle this zone is occupied by the base of the pallet 20. The lower portion of film, during the first winding lap, thus wraps around the base of the pallet 20 while the upper portion of the film wraps around the lower portion of the hopper 3. Advantageously the base of the pallet 20 extends peripherally beyond the platform 2 so that a lower tract of the height of the film adheres below the platform 2 of the pallet 20.

Once the first lap of wrapping has been completed, the platform 2 is made to descend while the unwinding device 5 continues to rotate, wrapping the film about the hopper 3 and the pallet 20. The descending motion of the platform 2, on which the pallet 20 is resting, draws the layer of film wound on the hopper downwards. The film is longitudinally elastically stretched as it is wrapped so that when it disengages from the lower portion of the hopper 3 it tightly wraps the layer of containers 30 exiting from the bottom of the hopper 3. Thanks to the combined action of the unwinding device 5 and the platform 2, the action of lateral containment which the hopper 3 exerts on the containers 30 is taken over by the film as soon as the containers 30 exit from the bottom of the hopper 3. The lateral containment of the pallet 20 develops contemporaneously with the formation of the pallet 20; each layer of containers 30 deposited on the pallet 20 is wrapped and laterally constrained by the film as soon as it is deposited on the underlying layer of containers 30. It is important that the winding of the pallet is done contemporaneously with the depositing of the bags, in order not to increase work cycle times.

To ease sliding of the film in a downwards direction, the hopper 3 comprises an anti-friction device, arranged at least on a lower portion of the hopper 3 and in a position corresponding to the portion which will be occupied by the film. The anti-friction device might be for example a layer of Teflon, or idle rollers on which the film can slide.

Once the pallet has been completed, with a desired number of deformable containers 30 and complete peripheral wrapping of the pallet for the entire height thereof, it is evacuated from the machine via the transport line 21 and an empty pallet is substituted. At the end of the cycle the platform 2 is in the lowered position at which it is aligned with the transport line 21. The hopper 3 is at such a level with respect to the transport line 21 that full pallets can pass below it. At the exit of the transport line 21 the complete pallet can be moved and transported, for example using traditional means such as fork trucks, automated vehicles etc. Successively on the transport line 21 a machine for arranging a hood over the pallet can be arranged, for example, to guarantee further lateral containment of the containers 30 bags on the pallet. A further device which might be arranged on the transport line 21, more or less contemporaneously to the hooding machine, is a strapping machine, which can further strengthen and stabilise the pallet should the need arise.

The process for palletising deformable containers of the present invention which is realised by the described machine comprises the following stages:
arranging an empty pallet below a hopper which is conformed and arranged to depositing onto the pallet layers of deformable containers, peripherally restraining the containers;
introducing into the hopper successive layers of deformable containers;
wrapping at least a first layer of extensible film around the hopper and the pallet so that at least a first tract of the film is below the pallet at least over a part of a breadth of the film;
translating the pallet downwards, progressively wrapping the extensible film in order for the film to be arranged, for a part of a breadth thereof, about a lower portion of the hopper, and for a further part of the breadth thereof, about the pallet, while successive layers of deformable containers are deposited on the pallet through the hopper.

The machine and process of the invention offer important advantages. Firstly, the packing of the deformable containers does not require the use of metal crates or sacks, but can be performed using an economical material which is simply disposable, which can be stored in large quantities without occupying large spaces, for example an extensible film of a type commonly used in pallet sealing. Furthermore, the machine and the process can be easily integrated into high-speed line production processes: the wrapping of the pallets is extremely simple and rapid and can therefore be performed in-line following a bag filling operation and closure of the bags.

The wrapping of the pallets is done at the same time as the pallet composition, which is performed by successively depositing the sacks; thus cycle times remain the same as those using metal crates or sacks. The pallets composed using the invention are easily transportable and moveable using traditional vehicles, such as fork trucks or automated trucks. The packing is decidedly contained in terms of mass, and it is not necessary to destroy it completely to remove the bags, its being sufficient to remove the necessary number of bags. The pallet retains its shape and stability during use and removal of the bags, even if done by hand, is practical and easy.

## Claims

1. A machine for palletizing deformable containers, **characterised in that** it comprises: a platform (2) for a pallet (20); a hopper (3) located above the platform (2), which is conformed and arranged in such a way as to direct successive layers of deformable containers (30) onto the pallet (20) while restraining the containers (30) peripherally; means (4) for arranging extensible film around the hopper (3) so that, by effect of a relative vertical sliding motion between the pallet (20) and the hopper (3), the extensible film transfers from the hopper (3) to the successive layers of deformable containers (30), peripherally restraining the containers (30).

2. The machine of claim 1, **characterised in that**: the platform (2) is vertically mobile between a lowered position and a raised position in which raised position the platform (2) is in proximity of the hopper (3); the means (4) for arranging comprising an unwinding device (5) which is predisposed to unwind the extensible film in such a way that the extensible film is arranged, over a portion of a breadth thereof, about a lower portion of the hopper (3), and for another portion of a breadth thereof about the pallet (20); the unwinding device (5) unwinding the film about the pallet (20) while the platform (2) descends from the raised position thereof into the lowered position thereof and successive layers of containers (30) are deposited on the pallet (20) so that at least a first tract of the extensible film is arranged, at least over a portion of a breadth thereof, below the platform (2) of the pallet (20), and the extensible film is drawn downwards by effect of a downwards movement of the pallet (20), passing from the lower portion of the hopper (3) and progressively being arranged about the pallet (20).

3. The machine of claim 1, **characterised in that** the hopper (3) exhibits an upper portion which has a larger section than the lower portion thereof, through which upper portin the deformable containers (30) are introduced from above by means of a gripping device (40).

4. The machine of claim 2, **characterised in that** the platform (2), when in the lowered position thereof, is aligned with a transport line (21) predisposed for loading and unloading the pallet (20) to and from the platform (2) in a horizontal direction, and comprises a transport system (7) for moving the pallet (20) in the horizontal direction of transport.

5. The machine of claim 2, **characterised in that** the hopper (3) comprises, at least at the lower portion thereof, anti-friction means for easing the downwards sliding of the extensible film.

6. The machine of any one of the preceding claims, **characterised in that** the extensible film is wrapped around the pallet while in a longitudinally stretched state.

7. A process for palletizing deformable containers, **characterised in that** it comprises following stages:
arranging an empty pallet below a hopper which is conformed and arranged to deposit onto the pallet layers of deformable containers, peripherally restraining the containers;
introducing into the hopper successive layers of deformable containers;
wrapping at least a first layer of extensible film around the hopper and the pallet so that at least a first tract of the film is below the pallet at least over a part of a breadth of the film;
translating the pallet downwards, progressively wrapping the extensible film in order for the film to be arranged, for a part of a breadth thereof, about a lower portion of the hopper, and for a further part of the breadth thereof, about the pallet, while successive layers of deformable containers are deposited on the pallet through the hopper.
